# EUROPEAN PATENT SPECIFICATION

(11) **EP 0 998 392 B1**
(45) Date of publication and mention of the grant of the patent: **16.11.2005**
(21) Application number: 98935656.3
(22) Date of filing: 15.07.1998
(51) Int. Cl.: B41J 2/165, B41J 2/05, C09D 11/00

(54) **METHODS AND APPARATUS FOR INK CAPPING INK JET PRINTER NOZZLES**
VERFAHREN UND GERÄT ZUM TINTENDICHTEN ABDECKEN VON TINTENSTRAHLDRUCKERDÜSEN
PROCEDE ET APPAREIL DE PROTECTION DES BUSES D'IMPRIMANTES A JET D'ENCRE

(30) Priority: 31.07.1997 US 903016
(43) Date of publication of application: 10.05.2000
(60) Divisional application: 04012273.1
(73) Proprietor: ILLINOIS TOOL WORKS INC., Glenview Illinois 60026-1215 (US)
(72) Inventor: ROSENBERGER, John, E., Plantsville, CT 06479 (US); FOX, James, E., Cambridge CB1 3EG (GB); HUDD, Alan, L., Nuthampstead, Hertfordshire SG8 8NG (GB)
(74) Representative: Vetter, Ewald Otto
(86) International application number: PCT/US1998/014574
(87) International publication number: WO 1999/006213

(56) References cited:
- US-A- 4 176 361
- US-A- 4 597 794
- US-A- 4 791 165
- US-A- 5 154 761
- US-A- 5 160 535
- US-A- 5 329 293
- US-A- 5 376 169

## Description

### Field of the Invention:

The present invention relates to ink jet printers and, more particularly, to methods and apparatus for preventing ink clogging in such devices.

### Background of the Invention:

Ink jet printing is performed by discharging ink droplets from a print head to a substrate. The droplets are ejected through orifices or nozzles in the print head and are directed to the substrate to form an image thereon. In contrast to many other types of printing, there preferably is no contact between the printer and the substrate with ink jet printing.

Most of the ink jet printers known in the art may be characterized as either continuous or impulse devices, depending upon the mechanism by which the ink droplets are directed to the substrate. In continuous ink jet systems, an essentially uninterrupted stream of ink is ejected from a nozzle and breaks up into droplets. The droplets bear an electric charge so that they can be deflected by an applied electric field which is modulated according to the particular image to be recorded. The electric field directs the droplets toward either the substrate or an ink re-circulating reservoir.

With so-called "impulse" or "drop-on-demand" ink jet printers, image formation is controlled by selectively energizing and de-energizing, for example, a piezoelectric transducer or solenoid rather than by modulating an applied electric field. Ink is stored in the print head or nozzle until it is necessary to form an image on the substrate. The printer is then activated by print signals to apply pressure to the ink and discharge a selected number of discrete ink droplets toward the substrate.

Because ink is ejected from impulse-type printers only periodically, these devices present a number of problems which typically are not encountered in continuous ink jet systems. These problems, which occur during the relatively short intervals between individual print signals during a single print cycle, include irregularly shaped drops and/or improper spacing of drops. The root cause of these problems may be attributable to movement of the ink meniscus at the time a print signal is generated, particularly where efforts are made to print at a frequency in excess of 3 KHz. One approach to these problems is presented by U.S. Patent 4,266,232, in the name of Juliana, Jr., *et al*., which discloses an impulse printer wherein ink drops of substantially uniform size and spacing are generated by applying drive pulses in a mutually synchronous fashion at every one of predetermined equal intervals. The amplitude of the drive pulses is controlled so that the amplitude of the drive pulse is below that of a print signal when no drop is to be formed. An even better approach is presented by U.S. Patent 4,459,601, in the name of Howkins, wherein a fill-before-fire mode of operation is disclosed, i.e., a pulse of predetermined length is used to initiate filling of the jet chamber and firing of a droplet occurs on the trailing edge of the pulse.

Certain other problems associated with impulse ink jet printers relate to the considerably longer intervals between print cycles. Unlike continuous ink jet printers, impulse devices typically are maintained in stand-by or quiescent modes for relatively long intervals, sometimes on the order of seconds, minutes, and even hours. During these intervals, ink is allowed to stand, thicken due to evaporation of ink components, and possibly clog the nozzles of the print head. Impulse printers may begin a printing cycle with such thickened material in place. Many of the start-up problems encountered with impulse printers are attributable to ink which has been allowed to clog the nozzles during quiescent periods. Ink clogging is less of a concern in continuous systems because there typically are fewer interruptions in the flow of ink and any such interruption is of considerably shorter duration. Even where ink is allowed to stand and solidify in a continuous ink jet printer, it is more easily purged due to the considerably higher pressures at which these devices operate.

A number of methods and apparatus are known in the art for preventing clogging in ink jet printers during quiescent periods. For example, U.S. Patent 4,970,527, in the name of Gatten, discloses an ink jet printer which prevents clogging by printing a few ink dots when the printer is idle. The method of Gatten, however, wastes both ink and printing substrate.

U.S. Patent 3,925,789, in the name of Kashio, discloses an ink jet recording device which comprises a timer for determining the length of a quiescent period and a means for preliminarily ejecting ink from a nozzle if the quiescent period exceeds a predetermined amount of time. The ejected ink is not directed to a printing substrate but, rather, to an ink collector. U.S. Patent 4,540,997, in the names ofBiggs, *et al*., discloses an ink jet printer wherein clogging is minimized by transporting the nozzles during quiescent periods to communicate with a wash station and then ejecting ink from the nozzles into the wash station if the printer has not functioned for a predetermined period of time.

U.S. Patent 5,329,293, in the name of Liker, discloses an ink jet printer apparatus wherein clogging is minimized by pulsing the ink in the nozzle during quiescent periods. The pulsing signal provided is less than the size of a pulse signal that would cause ink to eject from the nozzle. This techniques is referred to as sub-pulsing. The sub-pulsing method and apparatus are effective and efficient in preventing ink from clogging the nozzle. However, with some extremely fast-drying inks, the sub-pulsing leads to constant evaporation of solvents from the ink. As a result, all of the ink within the nozzle may suffer an increase in viscosity during the sub-pulsing period. Eventually the viscosity my increase too much and adversely effect the operation of the printer.

Therefore, there exists a need for relatively simple methods and apparatus for preventing ink jet clogging with faster drying inks which do not waste ink or printing substrate and which do not require additional devices such as ink collectors and washing stations.

### Summary of the Invention:

The present invention provides methods and apparatus for preventing clogging in impulse ink jet printers. It has been found in accordance with the invention that ink clogging during quiescent periods can be prevented by providing an ink that has the property of forming a barrier of higher viscosity ink where the ink contacts the ambient air. As a result, this viscosity barrier shields the remaining ink from the effects of air exposure during the quiescent period. Thereafter, the barrier is removed by a series of sub-pulses that re-homogenize the viscosity barrier and thereby clears the nozzle.

In a preferred embodiment, ink jet printers according to the invention comprise at least one nozzle having an orifice for ejecting ink droplets in response to a sequence of control signals, said sequence comprising firing signals and sub-firing signals, a chamber for containing an ink in fluidic communication with the orifice so that the ink forms a barrier of high viscosity ink at the orifice whenever the nozzle is in a quiescent state, control means for generating the sequence of control signals and for controlling the amplitude of the control signals. The control means generates a plurality of sub-firing signals after a predetermined period of quiescence. The sub-firing signals have amplitudes which are effective to remove the barrier from the orifice yet which are ineffective to eject droplets of ink therefrom. The control means generates a plurality of firing signals after the generation of sub-firing signals for a second predetermined period of time. The firing signals have amplitudes which are effective to eject droplets of ink from the nozzle; whereas the sub-firing signals have amplitudes which are effective to remove the barrier from the orifice yet which are ineffective to eject droplets of ink therefrom.

This printer is operated by allowing the ink within the nozzle to be exposed to the ambient air during a quiescent period of a predetermined time period such that a barrier of higher viscosity forms in the ink near the orifice. Thereafter, before using the printer, a plurality of sub-pulsing signals are generated which are effective to remove the barrier yet which are ineffective to eject droplets of ink. After the barrier has been removed, a plurality of firing signals can be generated on demand to eject droplets of ink from said nozzle.

One representative ink exhibiting the desired fast-drying properties comprises a colorant, propylene glycol methyl ether, diacetone alcohol, and at least one resin selected from the group consisting of polyester resins and styrene acrylic resins. The propylene glycol methyl ether comprise about 44 % by weight of the ink. The diacetone alcohol comprises about 40.6 % by weight of the ink. The polyester resin comprises about 6.3 % by weight of the ink. And, the styrene acrylic resin comprises about 1.7 % by weight of the ink.

### Brief Description of the Drawings:

The numerous objects and advantages of the present invention may be better understood by those skilled in the art by reference to the accompanying figures, in which:
Figure 1 is a diagram showing an impulse ink jet printing apparatus according to the present invention.
Figure 2 is a diagram showing a firing signal applied to a print head nozzle and the movement of ink within the nozzle in response to the signal.
Figure 3 is a diagram showing a sub-firing signal applied to a print head nozzle and the movement of ink within the nozzle in response to the signal.
Figure 4 is a diagram of the barrier formed on the meniscus of the ink within the nozzle;
Figure 5 is a flowchart of the sequence of firing and sub-firing signals.

### Detailed Description of the Invention:

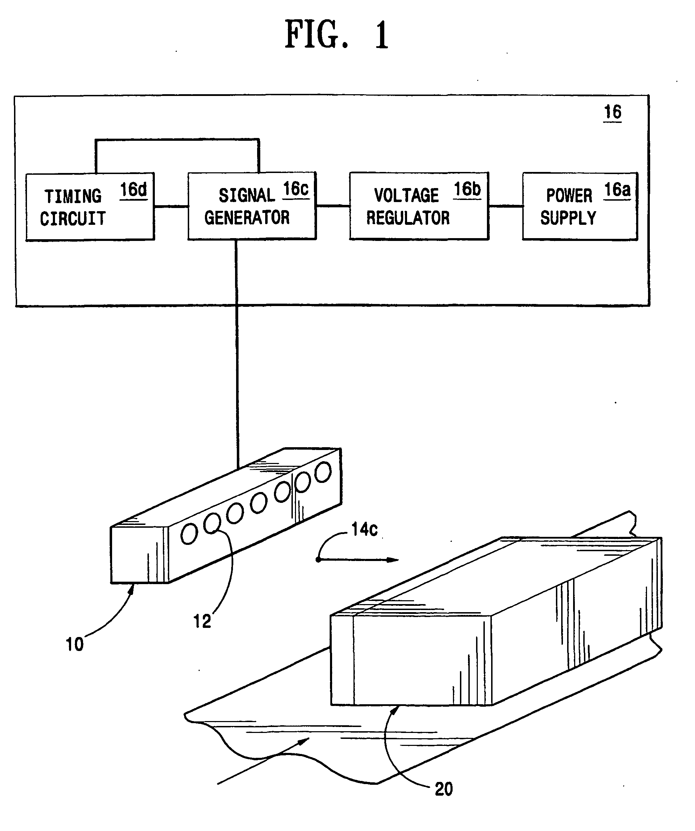

The methods and apparatus of the present invention can be used in conjunction with virtually any impulse or "drop-on-demand" ink jet printer which is subject to stand-by or quiescent periods. Referring to Figure 1, a representative printing apparatus according to the present invention is shown comprising a print head 10 having a plurality of nozzles 12 and control means 16 electrically coupled with the print head.

Any of the wide variety of print heads known in the art may be employed in the present invention, so long as it comprises at least one nozzle which ejects ink droplets in response to control signals. It is preferred that the print head be of the piezoelectric type, more preferably an MICROCODER 32/16 liquid ink jet imaging print head, which is commercially available from Trident, Inc of Brookfield, CT.

The control means 16 may be any of those known in the art to be capable of generating control signals. As shown in Figure 1, control means 16 preferably comprises a power source 16a, a voltage or current regulator 16b, a signal generator 16c, and a timing circuit 16d for determining the interval between firing signals. It is preferred that a voltage regulator be employed and that the signal generator generate signals initiated under software control. Control means amenable to the practice of this invention include computing devices such microprocessors, microcontrollers, capacitors, switches, circuits, logic gates, or equivalent logic devices. Preferred control means 16 include a personal computer coupled to a Trident 16-Channel Analog Driver Board, part number 016-7008-01, which is commercially available from Trident, Inc. The preferred driver board generates a control signal in the form of an RC time constant controlled waveform with a 14.5 µ second leading pulse followed by a 1.5 µ second off time and a 3.5 µ second trailing pulse. U.S. Patent Application Serial No. 08/823,718, filed March 25, 1997 and entitled "High Performance Impulse Ink Jet Method and Apparatus," discloses firing waveforms for ejecting ink from an ink jet nozzle and includes the preferred firing pulse of the present invention.

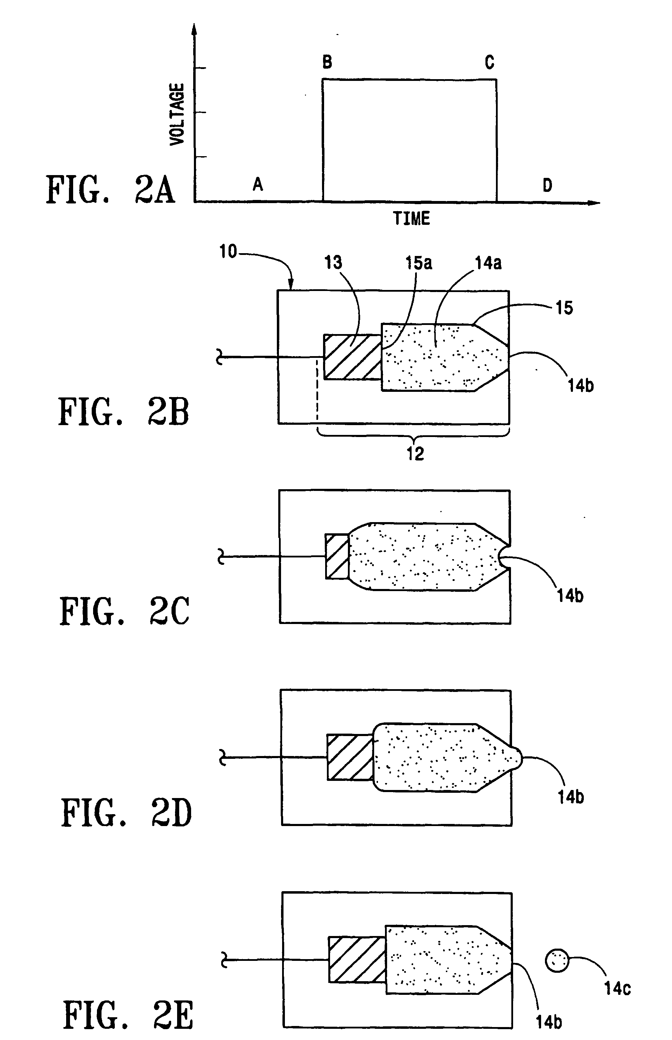

As shown in Figures 1 and 2A-2E, one or more ink droplets 14c can be ejected from the nozzles 12 toward substrate 20 by selectively energizing and de-energizing piezoelectric transducers 13. In preferred embodiments, each transducer 13 is attached to a membrane, sealant, or some other flexible member 15a in physical contact with a volume of ink 14a contained within chamber 15. The transducers are energized and de-energized through application of control signals. Although the control signal waveform could be selected from many known ink droplet firing signals, for brevity and simplicity of understanding, the firing control signal is shown in Figure 2A in the form of a square wave.

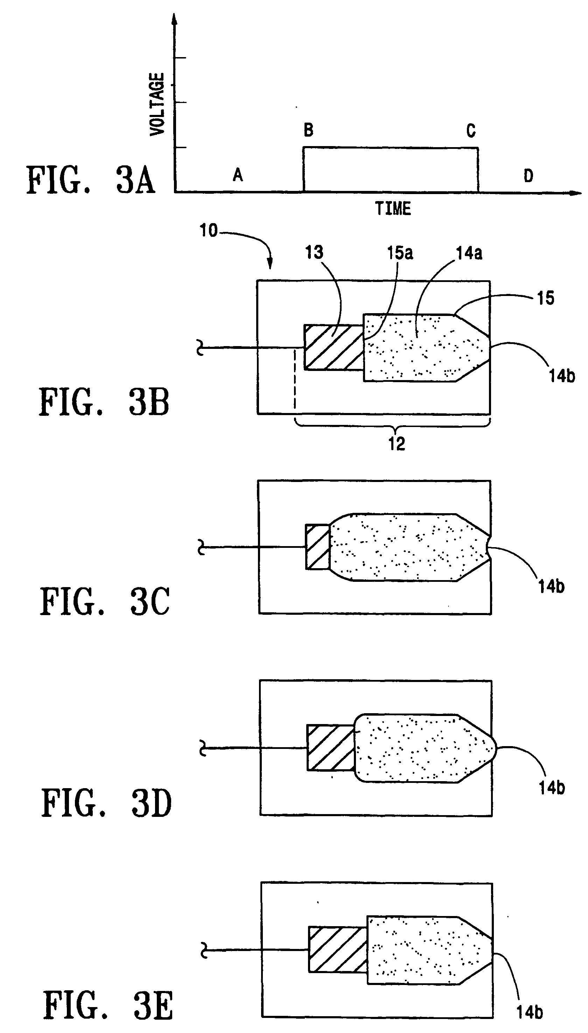

As discussed in the background section above, sub-pulsing techniques are known in the art whereby a signal of lesser amplitude is provided during quiescent periods to prevent the nozzle from clogging. Figures 3A-3E illustrated how the ink within a nozzle may react to a sub-pulse signal. As illustrated in Figure 3A, the sub-pulse signal is typically of smaller amplitude and shorter duration than a full drop-ejecting pulse. As such, the pulse is sufficient to move the ink within the nozzle without ejecting it therefrom. Such a technique has been used when a printer is in a quiescent state to prevent fast drying solvent based inks from drying out and clogging the nozzle. (See for example, U.S. Pat. No. 4,459,601, for a sub-pulsing scheme that applies pulses to the nozzle that are sufficient to move the ink within the nozzle and prevent clogging, but which are insufficient to eject ink droplets). The inventors believe, the sub-pulsing operates by constantly mixing the ink within the nozzle to maintain consistent viscosity.

In certain printing applications, it is advantageous to have an ink which has an extremely fast drying time. For some of the more fast drying inks, the mere application of sub-pulses would eventually increase the viscosity of the ink within the nozzle to a thick, unusable state. The present invention recognizes that allowing a fast-drying ink to dry in the nozzle forms a barrier of higher viscosity suspended solids between the nozzle orifice and the ink contained in chamber 15. The ink jet industry has generally tried to avoid such an effect because such a barrier would become a thick plug that would cause the nozzle to clog and operate inefficiently. Contradistinctly, the present invention utilizes this previously undesirable trait of fast-drying inks and uses it to a distinct advantage. In essence, by proper ink formulation, the barrier form in such a manner as to advantageous control the evaporation of solvents within the ink. The result is ink within the chamber that maintains a relatively constant viscosity. According to an aspect of the invention, an ink is formulated to have extremely fast-drying properties so that during the quiescent period a viscosity barrier rapidly forms at the orifice of the nozzle. Solvent and resin based inks, as described more fully below, have demonstrated the desired properties.

Preferred ink compositions comprise a glycol ether having a low boiling point, i.e. below 150° C, preferably a glycol alkyl ether having about 3 to 20 carbon atoms, more preferably 3-7 carbon atoms, and most preferably 4 carbon atoms. The preferred glycol alkyl ether is propylene glycol methyl ether. Preferably, the glycol alkyl ether comprises about 20 to 60 % by weight of the ink composition with about 44 % by weight being most preferred. Preferred ink compositions further comprise a ketone alcohol having about 1 to 10 carbon atoms. One preferred alcohol is diacetone alcohol. This component preferably comprises 20 to 60 % by weight of the ink more preferably 35 to 45 %, and most preferably about 40.6 % by weight.

The preferred ink compositions of this invention further comprise at least one resin selected from polyester resins and acrylic resins, such as styrene acrylic resin. Preferably, the ink composition comprises about 1 to 20 % of an alcohol soluble polyester, more preferably about 5 to 10 %, and most preferably 6.3 %. One preferred alcohol soluble polyester is Prince 5180, manufactured by Lawter International, Northbrook, I11. The ink composition preferably comprises about 1 to 10 % of a styrene acrylic polymer, more preferably 1 to 3 %, with 1.7 % being the most preferred. One preferred styrene acrylic polymer is Joncryl 678, available from S.C. Johnson & Son, Inc.

Preferred ink compositions also comprise a colorant. The choice of colorant and its concentration principally depend on the solubility of the colorant and the intensity of its color for a particular application. Preferably, the colorant is selected to render the ink composition visible to the human eye or some mechanical data collection device, such as a bar code scanner or other type of optical character reader. A preferred colorant comprises a dye such as Orasol Black RLI, which is available from Ciba-Geigy Co. of Ardsley, N.Y.

One particularly preferred ink that demonstrates the desired fast-drying properties has been prepared as follows:

| | |
|---|---|
| Propylene Glycol Methyl Ether | 44.0 % |
| Diacetone Alcohol | 40.6 % |
| Prince 5180 | 6.3% |
| Joncryl 678 | 1.7% |
| Orasol Black RLI | 7.4% |

The ink composition of this invention may further comprise one or more of the ink additives known in the art, so long as incorporation of the additives does not change the key drying properties as described in further detail below.

In accordance with the invention, the ink composition is selected so that a viscosity barrier of suspended solids, and which may actually become a solid, is allowed to form over the orifice of the nozzle during quiescent periods that exceeds predetermined time period, which is selected based on the ink formulation and other factors. Thereafter, when printing is requested, sub-pulsing is activated before printing can resume to remove the viscosity barrier by re-homogenizing it with fresh ink. While not wishing to be bound by any particular theory, it is believed that the theoretical explanation for the operation of the viscosity barrier is as described in further detail below.

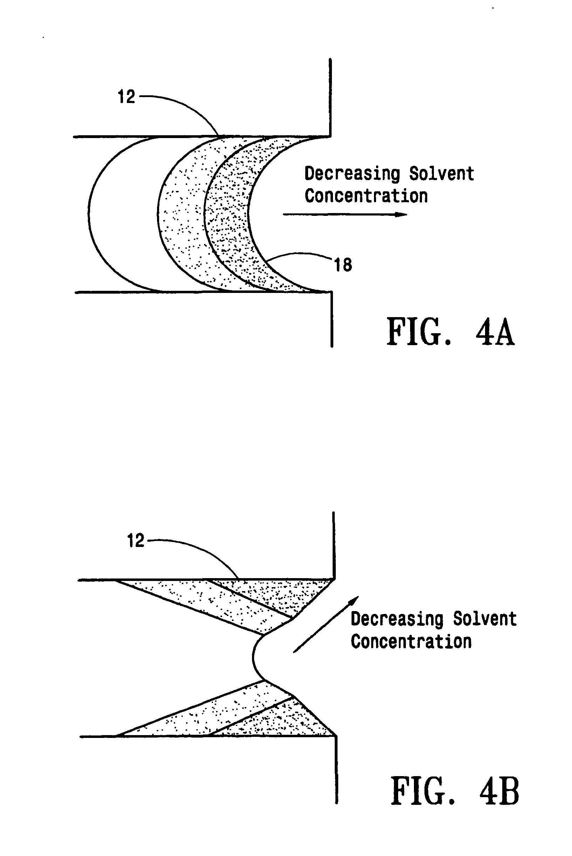

Without sub-pulsing, a solvent concentration gradient is rapidly formed at the surface of the ink in the nozzle orifice as the volatile solvent evaporates (see Figure 4A). Formation of this viscosity gradient or barrier 18 dramatically slows the rate of solvent loss from nozzle 12. Unlike many inks, with a properly selected ink, such as the formulation described above, re-homogenization readily occurs under perturbing action of the sub-pulse. Thus, by first sub-pulsing a nozzle containing the fast-drying ink, a nozzle 12 that has been dormant for an hour or more can be successfully fired again after a few seconds of sub-pulsing.

By contrast, if a constant sub-pulsing system is applied to such a fast drying ink, such as the preferred ink described above, the ink viscosity within nozzle 12 will rise too high and produce poor print performance. In such a system, it is believed that the sub-pulsing generates eddy currents which agitate the ink in nozzle 12, maintaining it homogeneity. As a result, fresh solvent is continuously being presented at the nozzle orifice and no viscosity gradient is formed. Over extended periods of sub-pulsing, the solvent level in nozzle 12 becomes extremely depleted causing the viscosity of the ink to rise significantly, especially at the edges of nozzle 12 where the sub-pulsing has the least effect (see Figure 4B).

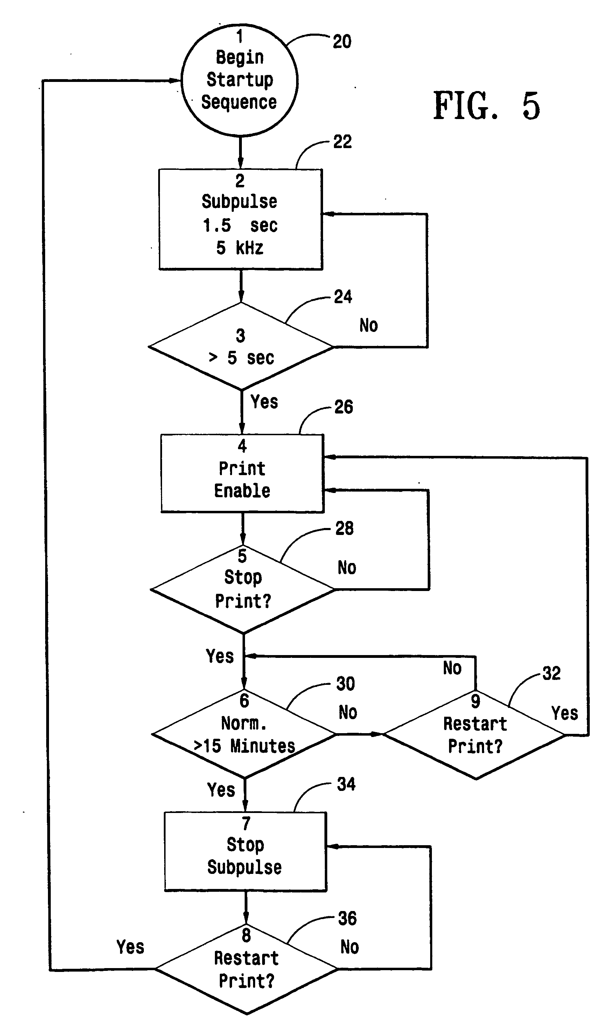

The preferred sequence of steps to employ the viscosity barrier and the sub-pulsing are shown in the flow chart of Figure 5. The startup sequence begins whenever a nozzle has been idle for an extended period of time (step 20). After startup, nozzle 12 is sub-pulsed for a predetermined period. Preferably, the sub-pulses have a pulse width of about 1.5 µ seconds and have a frequency of about 5 kHz (step 22). The sub-pulse amplitude is selected to move the ink yet insufficient to eject the ink from nozzle 12. The particular sub-pulse parameters were selected to operate effectively with the preferred ink. Other parameters may be substituted and produce similar results, particularly where the ink formulation is different from the preferred ink disclosed herein. The predetermined period of sub-pulsing time is the time required to ensure that the ink in the nozzle is re-homogenized with fresh ink from the chamber. It has been determined that 5 seconds is sufficient time to break-down the viscosity barrier that is formed by the preferred ink formulation described above. Of course, other re-homogenization periods could be used depending on the particular characteristics of the ink selected and the quality of operation desired. After the 5 second period (step 24), the print function of the nozzle is enabled (step 26). The nozzle is then available to eject droplets on demand until printing is complete and returns to a quiescent state (step 28).

While the printer is active and for a period thereafter, sub-pulsing of the ink can continue to maintain a constant viscosity of the ink as with constant sub-pulsing system. That is, just as with constant sub-pulsing systems, the system disclosed herein contemplates that the printer can remain enabled with constant sub-pulsing on for some predetermined period of time without clogging the nozzle or raising the ink viscosity to an unusable level. However, if the printer remains idle for an extended period (about 15 minutes in the present example), the sub-pulsing should cease, allowing the viscosity barrier 18 to form over the orifice (see also Figure 4A). Accordingly, a timer is set for about 15 minutes during which time printing can restart on demand (steps 30, 32). After that time has expired, sub-pulsing is stopped and restarting requires completion of the start-up sequence to re-homogenize the viscosity barrier (steps 34, 36).

Those skilled in the art will appreciate that numerous changes and modifications may be made to the preferred embodiments of the invention. For example, instead of generating control signals as in the present invention by modulating the amplitude of applied electric energy, it may be possible generate such signals by modulating applied light energy or heat. Moreover, other fast drying inks using completely different formulations could be used, so long as they exhibit the desired fast-drying properties.

## Claims

1. An impulse ink jet printer which comprises:
at least one nozzle (12) having an orifice for ejecting ink droplets (14c) in response to a sequence of control signals, said sequence comprising firing signals and sub-firing signals;
a chamber (15) for containing an ink in fluidic communication with said orifice, wherein said ink has a chemical solvent base and a concentration of solids so that the solvent evaporates and forms a barrier of high viscosity ink at said orifice when said nozzle is in a quiescent state;
control means (16) for generating the sequence of control signals and for controlling the amplitude of the control signals, wherein:
the control means (16) are provided for generating a plurality of sub-firing signals after a predetermined period of quiescence wherein sub-firing is minimal, **characterized in that** said predetermined period is selected to be sufficient to form a barrier of high viscosity ink at said orifice, said sub-firing signals having amplitudes which are effective to remove the barrier from the orifice yet which are ineffective to eject droplets of ink there from; and
the control means (16) are provided for generating a plurality of firing signals after said generation of sub-firing signals for a second predetermined period of time, said firing signals having amplitudes which are effective to eject droplets of ink from said nozzle (12).

2. The printer of claim 1 wherein the second predetermined period of time is the time sufficient to re-homogenize the viscosity barrier with fresh ink.

3. The printer of claim 1 or 2 wherein the second predetermined period of time is about 5 seconds.

4. A method of operating an impulse ink jet printer having at least one nozzle (12), comprising the steps of:
exposing a portion of ink contained in said nozzle (12) to air 50 that a barrier of higher viscosity forms in the ink;
generating a plurality of sub-firing signals, said sub-firing signals having amplitudes which are effective to remove the barrier yet which are ineffective to eject droplets of ink; and
generating a plurality of firing signals, said firing signals having amplitudes which are effective to eject droplets (14c) of ink from said nozzle (12),
wherein the step of generating a plurality of sub-pulses is performed after a predetermined quiescent period and before the step of generating a plurality of firing signals, and wherein the predetermined quiescent period is selected to be sufficient for the formation of said barrier.

5. The method of claim 4 wherein the step of generating a plurality of sub-pulses continues at least until the barrier has been substantially re-homogenized with the ink in the nozzle (12).

6. The method of claim 4 or 5 wherein the step of generating a plurality of sub-pulses continues for at least about 5 seconds.

## Patentansprüche

1. Impulstintenstrahldrucker, aufweisend:
mindestens eine Düse (12) mit einer Öffnung zum Ausstoßen von Tintentröpfchen (14c) als Antwort auf eine Sequenz von Steuersignalen, wobei die Sequenz Auslösesignale und Subauslösesignale aufweist;
eine Kammer (15) zur Aufnahme einer Tinte in Fluidverbindung mit der Öffnung, wobei die Tinte eine chemische Lösungsmittelbasis und eine Konzentration von Feststoffen aufweist, so dass das Lösungsmittel verdunstet und eine Barriere hoher Viskosität an der Öffnung bildet, wenn die Düse in einem Ruhezustand ist;
Steuermittel (16) zur Erzeugung der Sequenz von Steuersignalen und zum Steuern der Amplitude der Steuersignale, wobei
die Steuermittel (16) vorgesehen sind, um eine Vielzahl von Subauslösesignalen nach einer vorbestimmten Ruhezeitdauer zu bilden, in welcher das Subauslösen minimal ist,
**dadurch gekennzeichnet, dass** die vorbestimmte Zeitdauer so gewählt ist, dass sie ausreichend ist, eine Barriere hoch viskoser Tinte an der Öffnung zu bilden, wobei die Subauslösesignale Amplituden aufweisen, welche wirksam sind, um die Barriere von der Öffnung zu entfernen, doch welche unwirksam sind, Tintentröpfchen aus ihr auszustoßen; und dass die Steuermittel vorgesehen sind, um nach der Erzeugung von Subauslösesignalen für eine zweite Zeitdauer eine Vielzahl von Auslösesignalen zu erzeugen, wobei die Auslösesignale Amplituden aufweisen, die wirksam sind, um Tintentröpfchen aus der Düse (12) auszustoßen.

2. Drucker nach Anspruch 1, wobei die zweite vorbestimmte Zeitdauer die Zeit ist, welche ausreichend ist, um die Viskositätsbarriere mit frischer Tinte zu rehomogenisieren.

3. Drucker nach Anspruch 1 oder 2, wobei die zweite vorbestimmte Zeitdauer ungefähr 5 Sekunden beträgt.

4. Verfahren zum Betrieb eines Impulstintenstrahldruckers mit mindestens einer Düse (12), die Schritte aufweisend:
Luftexposition eines Teils der Tinte, welche in der Düse (12) enthalten ist, so dass sich eine Barriere höherer Viskosität in der Tinte bildet; Erzeugen einer Vielzahl von Subauslösesignalen, wobei die Subauslösesignale Amplituden haben, welche wirksam sind, um die Barriere zu entfernen, doch welche unwirksam sind, um Tintentröpfchen auszustoßen; und
Erzeugen einer Vielzahl von Auslösesignalen, wobei die Auslösesignale Amplituden haben, welche wirksam sind, um Tintentröpfchen (14c) aus der Düse (12) auszustoßen,
wobei der Schritt des Erzeugens einer Vielzahl von Subpulsen nach einer vorbestimmten Ruhezeitdauer und vor dem Schritt des Erzeugens einer Vielzahl von Auslösesignalen durchgeführt wird,
und wobei die vorbestimmte Ruhezeitdauer so gewählt ist, dass sie zur Bildung der Barriere ausreichend ist.

5. Verfahren nach Anspruch 4, wobei der Schritt des Erzeugens einer Vielzahl von Subpulsen mindestens fortdauert bis die. Barriere im wesentlichen mit der Tinte in der Düse (12) rehomogenisiert wurde.

6. Verfahren nach Anspruch 4 oder 5, wobei der Schritt des Erzeugens einer Vielzahl von Subpulsen mindestens ungefähr 5 Sekunden fortdauert.

## Revendications

1. Imprimante à jet d'encre à impulsions qui comprend :
au moins une buse (12) ayant un orifice pour éjecter des gouttelettes d'encre (14c) en réponse à une séquence de signaux de contrôle, ladite séquence comprenant des signaux de déclenchement et des signaux de sous-déclenchement ;
une chambre (15) pour contenir une encre en communication fluide avec ledit orifice, dans laquelle ladite encre présente une base de solvant chimique et une concentration de solides de sorte que le solvant s'évapore et forme une barrière d'encre à viscosité élevée audit orifice lorsque ladite buse est dans un état de repos ;
des moyens de contrôle (16) pour générer la séquence de signaux de contrôle et pour contrôler l'amplitude des signaux de contrôle, dans laquelle :
les moyens de contrôle (16) sont agencés pour générer une pluralité de signaux de sous-déclenchement après une période prédéterminée de repos dans laquelle le sous-déclenchement est minimal, **caractérisés en ce que** ladite période prédéterminée est choisie de manière à être suffisante pour former une barrière d'encre à viscosité élevée audit orifice, lesdits signaux de sous-déclenchement ayant des amplitudes qui sont efficaces pour éliminer la barrière de l'orifice et cependant inefficaces pour éjecter des gouttelettes d'encre de celui-ci ; et
les moyens de contrôle (16) sont agencés pour générer une pluralité de signaux de déclenchement après la génération de signaux de sous-déclenchement pendant une seconde période prédéterminée de temps, lesdits signaux de déclenchement ayant des amplitudes qui sont efficaces pour éjecter des gouttelettes d'encre de ladite buse (12).

2. Imprimante selon la revendication 1 dans laquelle la seconde période prédéterminée de temps est le temps suffisant pour homogénéiser à nouveau la barrière de viscosité avec de l'encre nouvelle.

3. Imprimante selon la revendication 1 ou la revendication 2 dans laquelle la seconde période prédéterminée de temps est d'environ 5 secondes.

4. Procédé d'utilisation d'une imprimante à jet d'encre à impulsions ayant au moins une buse (12), comprenant les étapes consistant à :
exposer une portion d'encre contenue dans ladite buse (12) à l'air de sorte qu'une barrière de viscosité plus élevée se forme dans l'encre ;
générer une pluralité de signaux de sous-déclenchemerit, lesdits signaux de sous-déclenchement ayant des amplitudes qui sont efficaces pour éliminer la barrière et cependant inefficaces pour éjecter des gouttelettes d'encre ; et
générer une pluralité de signaux de déclenchement, lesdits signaux de déclenchement ayant des amplitudes qui sont efficaces pour éjecter des gouttelettes (14c) d'encre de ladite buse (12),
dans laquelle l'étape consistant à générer une pluralité de sous-impulsions est réalisée après une période de repos prédéterminée et avant l'étape consistant à générer une pluralité de signaux de déclenchement, et dans laquelle la période de repos prédéterminée est choisie de manière à être suffisante pour former ladite barrière.

5. Procédé selon la revendication 4 dans lequel l'étape consistant à générer une pluralité de sous-impulsions se poursuit au moins jusqu'à ce que la barrière ait été essentiellement homogénéisée à nouveau avec l'encre dans la buse (12).

6. Procédé selon la revendication 4 ou la revendication 5 dans lequel l'étape consistant à générer une pluralité sous-impulsions se poursuit pendant au moins environ 5 secondes.
